# EUROPEAN PATENT SPECIFICATION

(11) **EP 1 975 567 B1**
(45) Date of publication and mention of the grant of the patent: **20.11.2013**
(21) Application number: 08153307.7
(22) Date of filing: 26.03.2008
(51) Int. Cl.: G01C 21/36, G01C 21/26

(54) **Navigation apparatus with display of facilities**
Navigationsvorrichtung mit Anlagenanzeige
Appareil de navigation avec affichage d'installations

(30) Priority: 30.03.2007 JP 2007091229
(43) Date of publication of application: 01.10.2008
(73) Proprietor: Aisin AW Co., Ltd., Fujii-cho Anjo-shi, Aichi 444-1192 (JP)
(72) Inventor: Sakai, Toru, Okazaki-shi Aichi 444-8564 (JP)
(74) Representative: TBK

(56) References cited:
- EP-A1- 1 742 019
- US-A- 6 144 920
- US-A1- 2004 204 821
- US-B1- 6 807 480

## Description

The present invention relates to a navigation apparatus and, for example, a technology for narrowing a search to facilities which are located within a specific area therein.

A navigation apparatus for searching for a route to a preset destination or a route to a preset stop-off point and providing the route to a driver is well known in the art.

According to a conventional navigation apparatus, when a specific point such as a destination or a point which a driver wants to stop at is input, a method for narrowing a search to candidate facilities among facilities which are in a database based on a search condition such as a search by Japanese alphabet or a search by category is used.

A navigation apparatus, for example, disclosed in Japanese Unexamined Patent Application Publication No. 2007-40791, further limits the candidate facilities by adding another search condition which is a search by area when the number of the candidate facilities cannot be reduced enough because there are a lot of facilities which match the search condition such as the search by name or the search by category.

Document US 2004/204821 discloses an extraction processing performing collecting predetermined number of populated cells including a specified POI, producing a populated cell array, sorting the populated cell array by distance from a current vehicle position, retrieving POIs from first level of sorted cells, and sorting POIs by distance from the from the current vehicle position.

Document US 6 807 480 B1 discloses an extraction processing performing selecting an area, reading category data belonging to the area, referring flags representing absence or presence given to category data for excluding categories with no register points, obtaining categories with register points and displaying the obtained register points in a list. That is, this document discloses extracting register points based on the area.

Further, document US 6 144 920 A discloses an extraction processing performing detecting the number of facilities of a specified category existing in the region covered by a detailed map level packet in which the present position lies, and determining whether or not the number of facilities is equal to or larger than a predetermined value. If the number of facilities is determined to be larger than a predetermined value, the extraction processing further performs referring to the map data file of the detailed map level packet in which the present position lies, and obtaining data of facility data file pointers for all the facilities of the specified category located in the region covered by the packet.

Even further, document EP 1 742 019 A1 discloses an extraction processing performing specifying a record corresponding to a facility which matches a searching condition designated by a user among facilities existing inside meshes that lie within a predetermined distance from a point designated by the user, and extracting POI data designated by the record thus specified.

### SUMMARY OF THE INVENTION

A navigation apparatus includes a data table for storing minimum information such as how to read, category code, area code, and the like, by facility IDs, in addition to a database for storing detailed information such as position coordinate, address, phone number, and the like, by facility IDs. By using the data table, it is possible to speed up the search by name (by Japanese alphabet), the search by category, and/or a search by address. According to the navigation apparatus disclosed in Japanese Unexamined Patent Application Publication No. 2007-40791, when facilities to be searched are limited to facilities which are located within a specific area among a lot of candidate facilities, candidate facilities which are targeted for limiting the search are searched by using the data table and coordinates of the all candidate facilities which are targeted for the limiting the search are read out from the database. Further it is needed to check each of the read coordinates of the all candidate facilities which have been read out from the database to area information of the specific area one by one.

For example, when a range within a R-kilometer radius from a specific reference point is specified as the specific area, the navigation apparatus has to calculate each distance from the specific reference point to all candidate facilities which are targeted for limiting the search on the basis of the coordinates which have been read out from the database. That is, when the facilities are limited to facilities which are located within the specific area, coordinate information of the all candidate facilities are read out from detailed facility information which is stored in the database, not from the data table. Therefore, the navigation apparatus has a heavy workload while a lot of candidate facilities are limited to the facilities which are located within the specific area, and it is difficult for the navigation apparatus to speed up the search processing.

Acordingly, it is an object of the present invention to reduce a workload during a processing for limiting a search to facilities which are located within a specific area.

The above mentioned object is achieved by a navigation apparatus according to claim 1. Further advantageous features are defined in claim 2.

According to the present invention, when a search condition to narrow a search range is received, position information of facilities which are located within a target area in which a specific position range is included is read out and the search range of facilities is narrowed from all facilities which are located within the target area to facilities which are located within the specific range, so that it is possible to reduce a workload while limiting the search to only facilities which are located within the specific range.

### BRIEF DESCRIPTION OF THE DRAWINGS

FIG. 1 is a diagram showing a structure of a navigation apparatus according to a current embodiment.

FIG. 2A is a diagram showing an example of data records for search purposes. FIG. 2B is a diagram showing an example of point information records.

FIG. 3A is a diagram showing an example of an area code table. FIG. 3B is a diagram showing an example of a mesh code table.

FIG. 4 is a diagram showing an example of a mesh area.

FIG. 5 is a flowchart showing procedures of destination searching processing based on a search by area.

FIG. 6A is a diagram showing an example to display a limited search result of candidate destinations which are searched by name. FIG. 6B is a diagram showing a screen to select a target narrowed search range when "surrounding area" is selected as an area search condition. FIG. 6C is a diagram showing an example of a map screen to set a reference point. FIG. 6D is a diagram showing an example to display a facility list on which facilities within the narrowed search range are listed up.

FIG. 7A is a diagram showing an example of a relation between the narrowed search range and administrative areas. FIG. 7B is a diagram showing an example of a relation between the narrowed search range and mesh areas.

### DESCRIPTION OF THE PREFERRED EMBODIMENTS

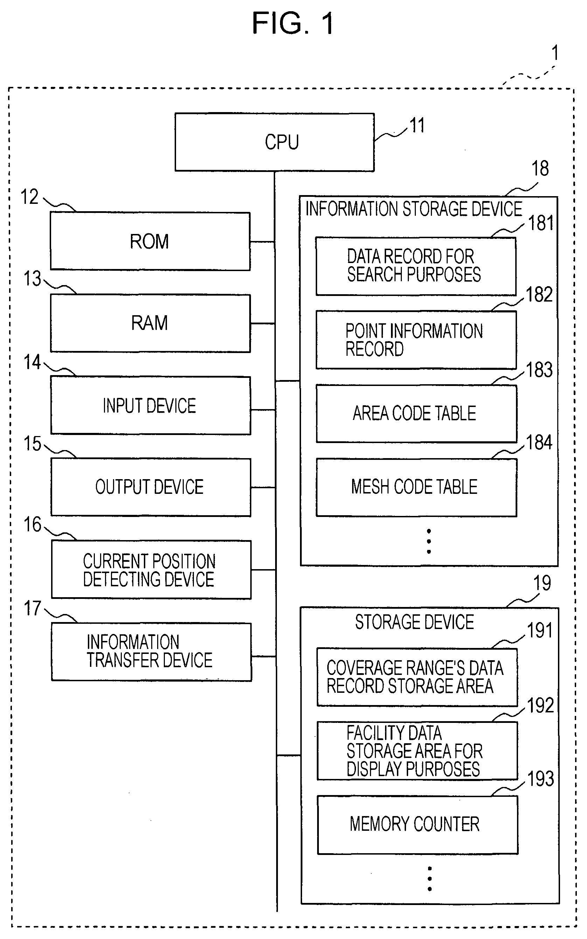

An embodiment of the present invention will be described with reference to FIGs. 1 through 7 in detail below.

### [Outline of Embodiment]

When a specific point such as a destination, a point which a driver stops at, or a stop-off point (collectively means "destination") is set, a navigation apparatus narrows a search range of candidate destinations on the basis of various types of search conditions and sets one destination based on the search result, that is, based on a candidate list. For example, candidate destinations are searched for by name or by category. However, when the number of the candidate destinations cannot be reduced enough, the search range is narrowed by area, so that only candidate facilities which are located within a specific area are extracted. According to the current embodiment, the number of the candidate facilities is reduced by the search by name and further the search range is narrowed to an area (narrowed search range) whose center is a specific reference point and whose radius is N-kilometers, so that only candidate facilities which are located within the narrowed search range are extracted.

To extract the candidate facilities which are located within the narrowed search range, area codes of administrative areas and mesh codes of mesh areas (subdivision plat areas) which are both located within the specified narrowed search range are searched for. Next, data records of candidate facilities which were searched by name are checked with the searched area codes and the candidate facilities which belong to the administrative areas within the narrowed search range are extracted. Further, the data records of the candidate facilities which were extracted on the basis of the area codes are checked with the searched mesh codes and the candidate facilities which belong to the mesh areas within the narrowed search range are extracted. Then, the position coordinates of the candidate facilities which belong to the mesh areas within the narrowed search range are compared with the narrowed search range, and only the facilities which are located within the narrowed search range are finally searched.

### [Detail of Embodiment]

FIG. 1 is a diagram showing a structure of a navigation apparatus 1 in the current embodiment. As shown in FIG. 1, the navigation apparatus 1 may include a CPU 11, a ROM 12, a RAM 13, an input device 14, an output device 15, a current position detecting device 16, an information transfer device 17, an information storage device 18, and a storage device 19. The CPU 11 is a central calculating processing device for controlling the navigation apparatus 1 based on various programs and data which are stored in the ROM 12, the RAM 13, and/or the information storage device 18. The ROM 12 is a reading only memory in which basic programs and/or basic parameters are stored for operating the navigation apparatus 1. The RAM 13 is a storage area which is functioned as a working area of the CPU 11. For example, the RAM 13 temporarily stores data in processing such as data according to an input search condition to narrow a search range.

The input device 14 is a device for directing the CPU 11 to perform a navigation processing on the basis of a user's will. For example, the input device 14 inputs information according to, for example, a destination (an address, a phone number, and/or position coordinate on a map of the destination), a point which the user wants to go through, a stop-off point, a search condition, or a search condition to narrow the search range, and/or a request for route guidance. According to the current embodiment, the input device 14 may include a touch panel (touch screen), so that the user may touch a display screen (display) of the touch panel with his/her finger directly (pointing processing). However, the input device 14 may include a remote controller such as a jog dial.

The output device 15 is, for example, a device for outputting a processing result of the CPU 11 such as input information from the input device 14, route guidance information, a destination setting screen, a map screen on which an area surrounding a current position is shown, and/or various types of menu screens. According to the current embodiment, the output device 15 may include a touch panel which is functioned as the input device 14 to display various types of menu screens such as the destination setting screen, the map screen on which the area surrounding the current position is shown, or a narrow search range setting screen. However, a speaker for outputting the route guidance with audio guidance and/or a printer for printing processing data may be further included separately.

The current position detecting device 16 detects a current position (the absolute coordinates in the latitude and the longitude) of a vehicle on which the navigation apparatus 1 is mounted and may include a GPS receiver for receiving information sent from a global positioning system (GPS) which detects position of vehicles using a satellite. Note that, the current position detecting device 16 may include a geomagnetic sensor for receiving a vehicle direction by detecting an earth magnetism, a gyro sensor, and/or a vehicle speed sensor as a support device to support the current position detecting operation which is performed by the GPS receiver. The information transfer device 17 may include a GPS receiver for obtaining a current position, a date and time, and/or time information using the global positioning system (GPS), a VICS information transfer device for obtaining traffic information using an FM multiple broadcasting, an electric wave beacon, an optical beacon, and the like, and a data transfer device for exchanging information with an information center (for example, ATIS) and another vehicle using a mobile phone or a PC.

The information storage device 18 is an external storage device for storing programs and data for the navigation processing. As the information storage device 18, for example, a CD-ROM or a DVD-ROM may be used and data which is used for a destination searching processing program, a route search program, or a route guidance program, and data which is used for processing each of the programs may be stored in the information storage device 18.
Specifically, search data which is used for a route search (for example, destination data, registered point data, road data, and category data) and guidance/display data (route guidance data, map display data, and map matching data which is used when a current position is detected) may be stored in the information storage device 18.

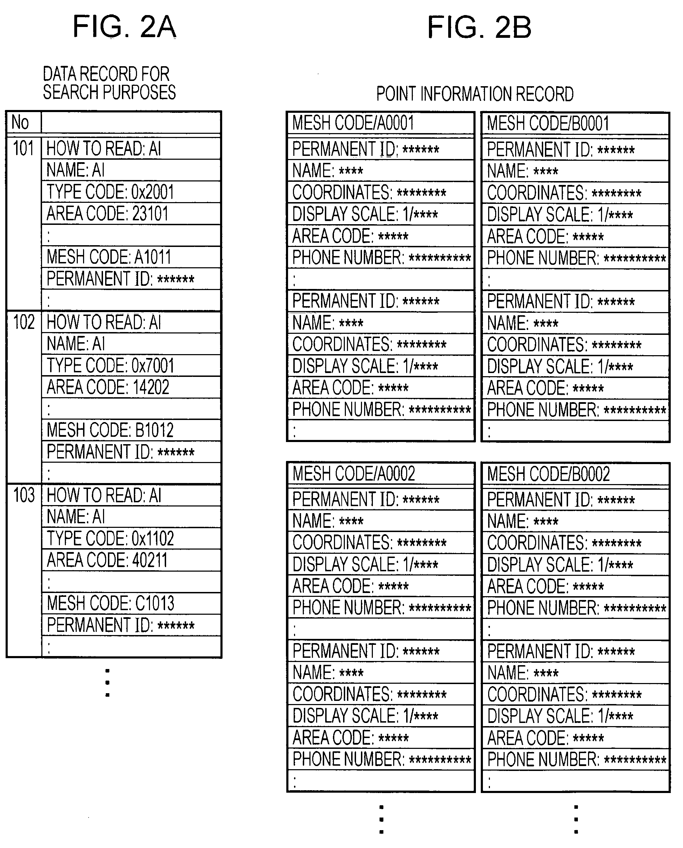

In the information storage device 18, a data record for search purposes 181, a map information record 182, an area record table 183, and a mesh code table 184 which are all used in the current embodiment may be further stored. FIG. 2A is a diagram showing an example of the data record for search purposes 181. The data record for search purposes 181 is a data record which is used when a search range of candidate facilities is narrowed on the basis of search by name (by Japanese alphabet) or search by category. As shown in FIG. 2A, records (data) of each facility are stored (sorted) in the data record for search purposes 181 in the order of how to read. As the facility records, how to read, name, type code, area code, mesh code, and permanent ID are sorted and stored by facility in the data record for search purposes 181. Note that, the type code is an identifying code of a category (type) which a facility belongs to. The area code is an identifying code of an administrative area (city, ward, town, or village level). The mesh code is an identifying code of a mesh area which is subdivided into small areas. The permanent ID is an identifying code of the facility. The data record for search purposes 181 works as a first data table.

FIG. 2B is a diagram showing an example of the point information record 182. As shown in FIG. 2B, point information records of each facility are sorted and stored by mesh code in the point information record 182. Specifically, permanent ID, name, coordinates, display scale, area code, and phone number are stored by facility in the point information record 182. Note that, the coordinates indicate coordinates (the latitude and the longitude) of the position of the facility. The display scale is a map scale in which the facility can be displayed on a map. The point information record 182 works as a second data table.

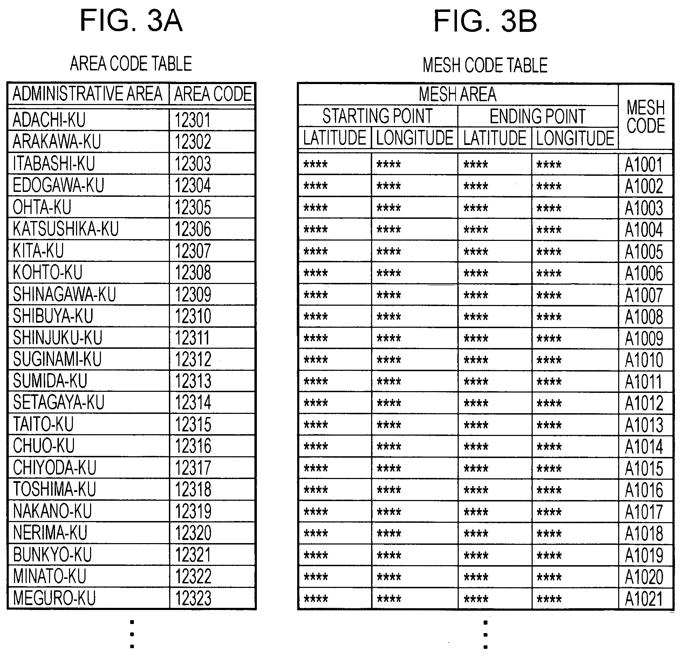

FIG. 3A is a diagram showing an example of the area code table 183. As shown in FIG. 3A, the area code table 183 is a data table in which administrative areas are related to area codes. Further, in the area code table 183, each area code is related to position information of administrative areas such as, for example, coordinate information which is provided by plotting administrative areas (indicating a border line between neighboring administrative areas).

FIG. 3B is a diagram showing an example of the mesh code table 184. As shown in FIG. 3B, the mesh code table 184 is a data table in which each mesh area is related to a mesh code.

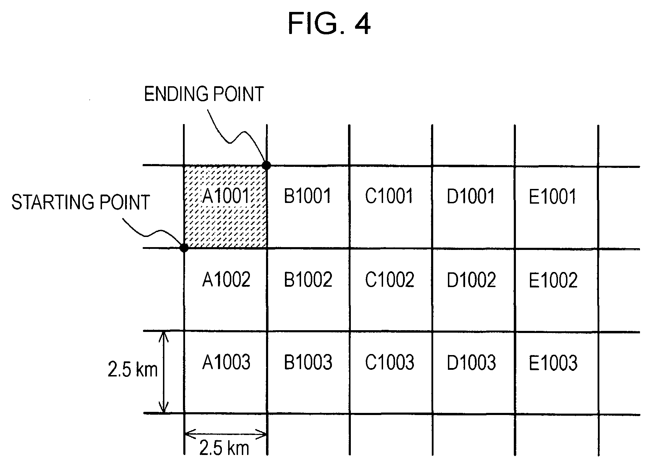

FIG. 4 is a diagram showing an example of the mesh area. As shown in FIG. 4, the mesh areas have no relation with the administrative areas and are small square areas which map data is subdivided into (mesh). Each mesh area is much smaller than one administrative area (sectioned range). According to the current embodiment, for example, one mesh area is a square, 2.5 km on a side. Note that, the size of one mesh area may be arbitrarily changed. Each mesh area is zoned in such a way that the borderlines between neighboring mesh areas are parallel to the latitude line and the longitude line. Therefore, each mesh area (a range which is zoned by the mesh) may be specified by obtaining one vertex and the opposite vertex of the square area, that is, each mesh area may be specified by obtaining coordinates of a starting point and an ending point (the latitude and the longitude) as shown in FIG. 4.

FIG. 1 will be explained again here. The storage device 19 may include a coverage range's data record storage area 191, a facility data storage area for display purposes 192, and a memory counter 193 which are all used in the current embodiment. In the coverage range's data record storage area 191, data records of facilities which are targeted for search by area are stored. In the facility data storage area for display purposes 192, display data of the facilities, which were limited by the search by area, are stored. The memory counter 193 is a counter for calculating the number of facilities which are stored in the facility data storage area for display purposes 192. According to the current embodiment, a facility list, on which facilities within the narrowed search range are listed, is displayed on one screen of the output device 15 (touch panel) the displayable number "n" of facilities at a time on the basis of the memory counter value of the memory counter 193. Note that, according to the current embodiment, the displayable number "n" of facilities on one screen is set as "5". However, the displayable number "n" is not limited to "5" and may be changed according to a display screen size and/or a display character size.

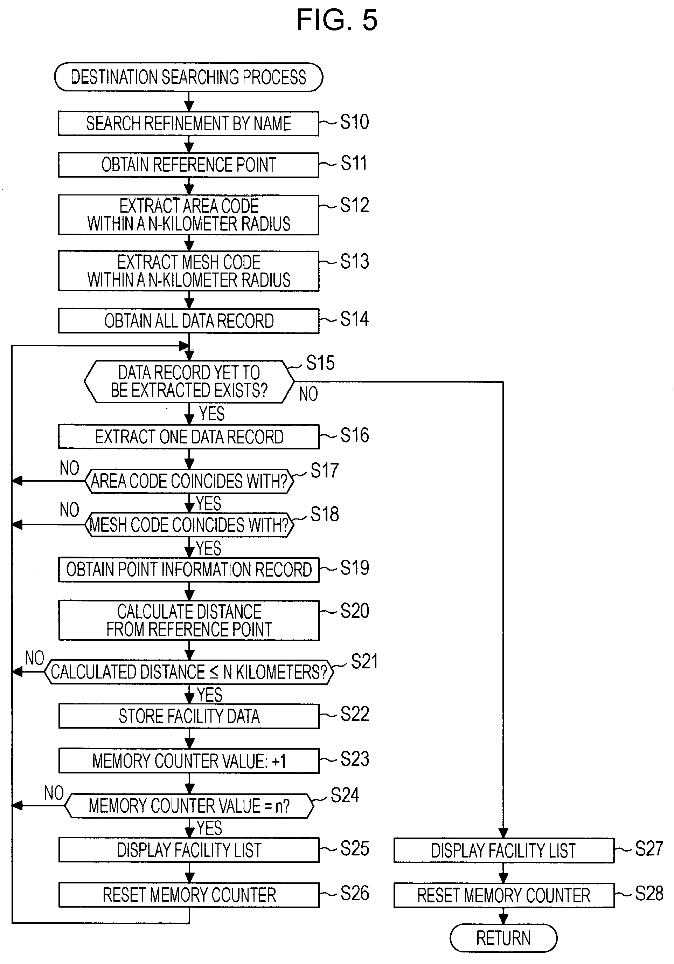

Next, a destination searching processing performed by the navigation apparatus 1 which has a structure described below, that is, a method of narrowing the search range of candidate destinations such as a goal, a point which the driver wants to go through, and/or a stop-off point (hereinafter referred to as destination) which are all set (input) will be described. FIG. 5 is a flowchart showing procedures of the destination searching processing on the basis of area search condition. First, the CPU 11 reduces the number of candidate destinations using the search by name (Step 10).

Specifically, for example, when a keyword input screen for narrowing the search range using the search by name is displayed, a user operates a character input screen which is displayed on the touch panel. For example, when the user inputs "AI" as a string of characters for searching for a destination, the CPU 11 accepts the input string of characters "AI" as a keyword which is used for the search by name. The CPU 11 searches for facility records whose how to read matches with the keyword which was accepted for the search by name from data record for search purposes 181 stored in the information storage device 18. The search result is displayed on the touch panel.

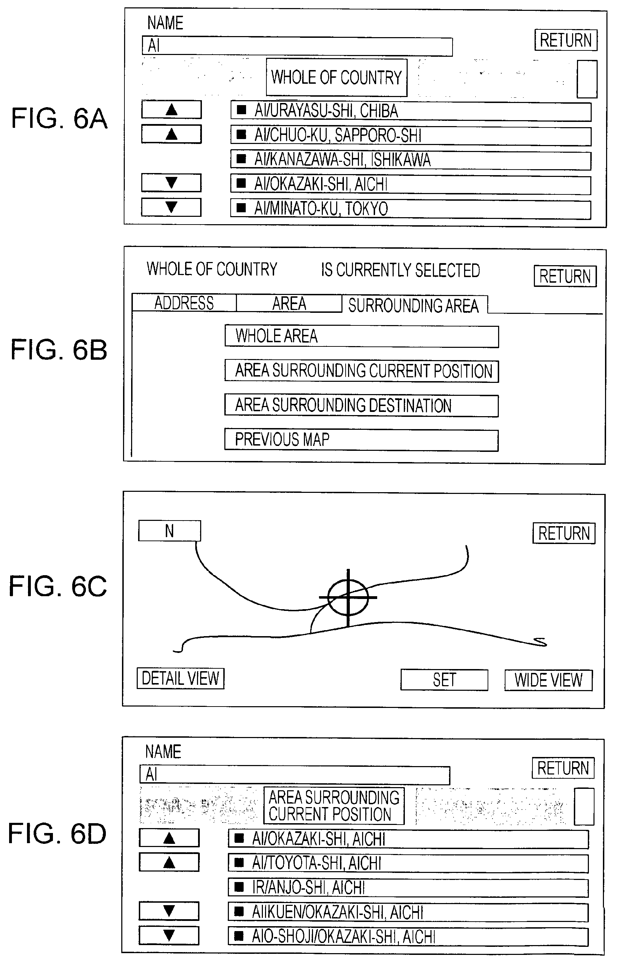

FIG. 6A is a diagram showing an example of the display of the searching result for reducing the number of candidate destinations by search by name. As shown in FIG. 6A, facility information such as names and rough addresses (city, ward, town, or village level) of the searched facilities are displayed as the search result of the candidate destinations on the basis of the search by name. Note that, even when only a part of facility information is displayed on one screen, operating a scroll bar which is displayed on the touch panel may allow the display of the rest of facility information.

When the number of candidate destinations cannot be reduced enough by the search range narrowing processing on the basis of the search by name which were described above, the navigation apparatus 1 of the current embodiment may further narrow the search range of the candidate destinations using the area search condition. When the user touches a "search by area" key on the display screen in which the search result of the search by name has been displayed as shown in FIG. 6A, the CPU 11 further executes the search range narrowing processing on the basis of the search by area. FIG. 6B is a diagram showing a selecting screen for the narrowed search range while the search condition by area "surrounding area" is selected. When the user touches the "search by area" key and selects a tab which indicates the search condition by area "surrounding area" displayed on the touch panel, the CPU 11 displays the selecting screen of the narrowed search range on the touch panel as shown in FIG. 6B.

As shown in FIG. 6B, in the screen for selecting the narrowed search range, some options such as "whole area", "area surrounding current position", "area surrounding destination", and "previous map" are set for selecting the search range. "Whole area" key is for resetting the search conditions which are currently used (that is, for resetting the current screen) for the narrowed search range. "Area surrounding current position" key is for limiting to facilities which are located within a range whose center is the current position (the reference point) and whose radius is N-km (for example, 10 km). "Area surrounding destination" key is displayed only when a travel route is set in advance and when a point which the driver wants to go through or a stop-off point is set. "Area surrounding destination" key is for limiting to facilities which are located within a range whose center is the ending point of the set route (destination) and whose radius is N-km (for example, 10 km). Note that, the radius N of the narrowed search range may be arbitrarily set. "Previous map" key is for limiting to facilities which are located within a map which was displayed on the touch panel last time.

According to the current embodiment, an example of narrowing the search range by area, that is, a case when only facilities which are located within an area surrounding the current position are searched for will be described. When the user touches "area surrounding current position" key on the display screen on which the search result of the search condition by name is displayed as shown in FIG. 6B, the CPU 11 obtains information according to the current position from the current position detecting device 16. FIG. 6C is a diagram showing an example of a map screen which is for setting the reference point. The CPU 11 displays the map screen of the area surrounding the current position on the touch panel on the basis of the obtained information according to the current position as shown in FIG. 6C. The center position of a crosshair pointer which is displayed on the map screen indicates the reference point as shown in FIG. 6C. The reference point can move to any position on the screen according to the operation on the touch panel. When the user touches "set" key on the screen, the CPU 11 obtains the center position of the crosshair pointer which is displayed on the map screen at the touching the "set" key by the user as the reference point (Step S11).

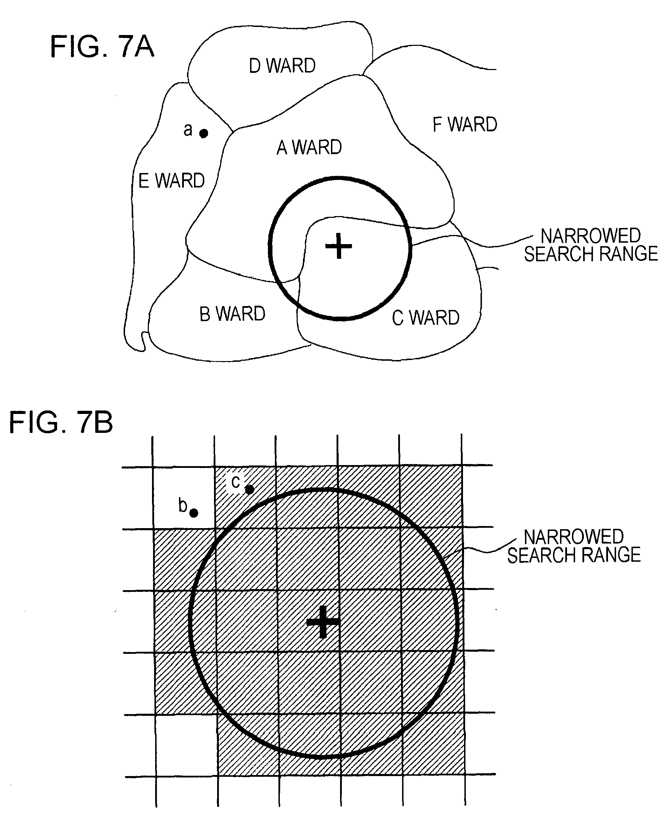

Next, the CPU 11 extracts the area codes of the administrative areas in which the range whose center is the obtained reference point and whose radius is N-km (hereinafter referred to as the narrowed search range) is included (Step S12) on the basis of position information of the administrative areas which are listed in the area code table 183. The CPU 11 stores the extracted area codes in the RAM 13. FIG. 7A is a diagram showing an example of a relation between the narrowed search range and the administrative areas. For example, when the narrowed search range is set as shown in FIG. 7A, the CPU 11 extracts the area codes of A ward, B ward, and C ward.

The CPU 11 further extracts mesh codes of the mesh areas in which the range whose center is the obtained reference point and whose radius is N-km is included on the basis of mesh area information of the mesh code table 184 (Step S13). The CPU 11 stores the extracted mesh codes in the RAM 13. Note that, the extracting processing of the area codes of the administrative areas in which the narrowed search range is included in Step S12 and the extracting processing of the mesh codes of the mesh areas in which the narrowed search range is included in Step S13 work as extracting means performed by the CPU 11. FIG. 7B is a diagram showing an example of the relation between the narrowed search range and the mesh areas. For example, when the narrowed search range is set as shown in FIG. 7B, the CPU 11 extracts the mesh codes of the mesh areas marked with diagonal lines.

The CPU 11 next obtains data records of all target facilities for narrowing the search from the data record for search purposes 181 (Step S14). The CPU 11 stores the obtained data records in the coverage range's data record storage area 191. According to the current embodiment, the data records of the facilities which are stored in the coverage range's data record storage area 191 are extracted one by one and processed one by one. All target facilities for limiting the search here indicate all facilities which are limited by the search by name as described above. That is, the obtained data records here are the same data records of facilities which correspond to the search result of the candidate destinations by the search by name in FIG. 6A. Thereby, the data records which have already been obtained may be diverted for this time.

The CPU 11 determines whether any data record yet to be extracted exists in the coverage range's data record storage area 191 (Step S15). When such a facility data record which has not been extracted yet exists (Step S15=YES), the CPU 11 randomly extracts one data record from the coverage range's data record storage area 191 (Step S16). An extracting flag which indicates that the data with the extracting flag has been extracted is on the extracted data record, so that the extracted data record can be identifiable among the data records yet to be extracted. The method of extracting the data record is not limited to this. For example, one data record may be extracted in the order of Japanese alphabet. The CPU 11 determines whether the area code of the extracted data record matches with the area code which has been extracted in Step S12 (Step S17). For example, facilities within the area including the point A as shown in Fig.7A are narrowed down by the above search condition. Namely, the facilities that are not in the specific searched range are excluded from the searched list.

When the extracted area codes match with each other (Step S17=YES), the CPU 11 determines whether the mesh code of the extracted data record matches with the mesh code which has been extracted in the processing in Step 13 (Step S18). For example, by the determination by the CPU 11 described above, all facilities which are located at point "b" in FIG. 7B, that is, all facilities which are located within the mesh area in which the narrowed search range is not included are exempt from the search. When the mesh code of the extracted data record matches with the mesh code which has been extracted in Step S13 (Step S18=YES), the CPU 11 reads out the permanent ID of the extracted data record and obtains point information records of facility data which are related to the read permanent ID (Step S19). The CPU 11 stores the obtained point information records in the RAM 13. The CPU 11 reads out coordinate data of the facilities from the obtained point information records and calculates distances from the reference point to each of the facilities on the basis of the coordinate data (Step S20). The CPU 11 stores the calculated distances from the reference point to each of the facilities in the RAM 13.

The CPU 11 determines whether each of the calculated distances from the reference point to each of the facilities is equal to or shorter than N-km (the specified distance of the narrowed search range), that is, whether the facilities are located within the narrowed search range (Step S21). For example, all facilities which are located at point "c" in FIG. 7B are exempt from the search because even though the facilities which are located at point "c" are located within the mesh areas in which a part of the narrowed search range is included, the facilities are not included within the narrowed search range itself. When the calculated distance is equal to or shorter than N-km (Step S21=YES), the CPU 11 stores the facility's data record in the facility data storage area for display purposes 192 (Step S22). Then the CPU 11 adds "1" to the memory counter value of the memory counter 193 (Step S23). The CPU 11 further determines whether the memory counter value of the memory counter 193 reaches the displayable number "n" (=5) of facility which can be listed on the screen of the touch panel at one time (Step S24).

When the memory counter value reaches the displayable number "n" (=5) of facility which can be listed at one time (Step S24=YES), the CPU 11 displays the facility list, in which the facilities being located within the narrowed search range are listed, on the touch panel on the basis of the facility data records which are stored in the facility data storage area for display purposes 192 (Step S25). In the facility data storage area for display purposes 192, displaying flags which indicate that the data record with the displaying flag has been displayed are set on the data records of facilities which have been displayed in the facility list, so that the data records of the displayed facilities are identifiable among other data records yet to be displayed. Note that, the limiting search processing of the facility list on which facilities being located within the narrowed search range are listed up works as search range narrowing means performed by the CPU 11. FIG. 6D is a diagram showing an example of the display of the facility list on which the facilities being located within the narrowed search range are listed. As shown in FIG. 6D, according to the current embodiment, names and rough addresses (city, ward, town, or village level) of the corresponding facilities are displayed as the facility list for the facilities which are located within the narrowed search range. The user may set the destination by selecting (touching) one desired facility from the facility list which is displayed on the touch panel and on which the facilities being located within the narrowed search range are listed up.

Note that, the facilities from the top to the "n"-th in the facility list which is stored in the facility data storage area for display purposes 192 are displayed on the touch panel first as the facility list of the facilities which are located within the narrowed search range as shown in FIG. 6D. The rest of the facilities in the facility list (the "n+1"-th facility and later) are not displayed yet. The rest of the facilities in the facility list are displayed after the user operates the scroll bar which is displayed on the touch panel. Specifically, according to the current embodiment, the rest of the facilities in the facility list (the "n+1"-th facility and later) are displayed on the touch panel in terms of the structure. However, in fact, the rest of the facilities in the facility list are in standby state to be displayed until the user's request (the user's operation of the scroll bar).

The CPU 11 resets the memory counter value of the memory counter 193 to "0" (Step S26) and repeats the procedures from Step S15. Note that, any one of when the area codes do not match with each other (Step S17=NO), when the mesh codes do not match with each other (Step S18=NO), when the calculated distance is not equal to or shorter than N-km (Step S21=NO), or when the memory counter value does not reach the displayable number "n" of facility (Step S24=NO), the CPU 11 repeats the procedures from Step S15. When it is determined that there is no data record of facility yet to be extracted in Step S15 (Step S15=NO), that is, when extracting flags are set on all data records stored in the coverage range's data record storage area 191, the CPU 11 displays the rest of the facilities which have not been displayed on the touch panel yet even though such the facilities are listed in the facility list in which the facilities located within the narrowed search range are listed on the touch panel on the basis of data records of the facilities, for which the displaying flags are not set, stored in the facility data storage area for display purposes 192 (Step S27). The CPU 11 resets the memory counter value of the memory counter 193 to "0" (Step S28) and the procedure returns to the main routine.

As described above, according to the current embodiment, when the candidate facilities as the destination are limited by the search by name once and further limited by the search by specific area (the narrowed search range), the processing of comparing the position coordinates of the facilities with the narrowed search range are performed only to the candidate facilities which are limited on the basis of the area codes and the mesh codes. Compared to the conventional way in which the processing is performed to all candidate facilities, the processing are performed only to a part of the candidate facilities, so that it is possible to limit only the facilities which are located within the narrowed search range. Therefore, it is possible to speed up the search range narrowing processing of the candidate facilities.

According to the current embodiment described above, the processing of comparing the position coordinates of the facilities with the narrowed search range are performed only to the candidate facilities which are limited on the basis of the area codes and the mesh codes. However, the method for extracting the candidate facilities which are targeted for the processing of comparing the coordinates of the facilities with the narrowed search range is not limited to this. For example, it may be possible to perform the processing of comparing the position coordinates of the facilities with the narrowed search range only to the candidate facilities (the extracted candidate facilities) which are limited on the basis of only the area codes. Or it may be possible to perform the processing of comparing the coordinates of the facilities with the narrowed search range only to the candidate facilities (the extracted candidate facilities) which are limited on the basis of only the mesh codes.

Specifically, when the candidate facilities which are targeted for the comparing processing are limited (extracted) on the basis of only the area codes, the procedures in Step S13 and S18 of the flowchart of the destination searching processing described above are not performed. That is, in Step S17, when the area code of the extracted data record matches with the area code which has been extracted in the procedure of Step S12 (Step S17=YES), the procedure goes to Step S19. Meanwhile, when the candidate facilities which are targeted for the comparing processing are limited (extracted) on the basis of only the mesh codes, the procedures in Step S12 and S17 of the flowchart of the destination searching processing described above are not performed. That is, after the data records are extracted in Step S16, the procedure goes to Step S18. As described above, when the candidate facilities are extracted on the basis of either one of the area codes or the mesh codes, both the area code data table and the mesh code data table may not be necessary.

According to the current embodiment, the narrowed search range for limiting only to the candidate facilities within the narrowed search range is a circle whose center is the specified reference point and whose radius is N-km. However, the shape of the narrowed search range is not limited to this. For example, an arbitrary shape such as a triangle, a polygonal shape including a square, or a range which is specified by the user. Note that, when the narrowed search range is not a circle whose center is the specific reference point, the processing for determining whether the facilities are located within the narrowed search range, the processing is performed for the all facilities which are located within the mesh areas in which the narrowed search range is included, is performed by directly comparing the coordinates of the facilities with the narrowed search range. According to the current embodiment, the candidate facilities which have been limited by the search by name are target facilities for the extracting processing (limiting processing) of the facilities which are located within the specific narrowed search range. However, the target facilities are not limited to this. For example, the candidate facilities which are limited by another search condition such as the search by category or the search by phone number may be set as the target facilities.
Candidate facilities, which have been limited by a search by name, are further limited to facilities which are located within a specific narrowed search range. First, area codes of administrative areas and mesh codes of mesh areas which are both within the specific narrowed search range are searched for. The candidate facilities which belong to the searched administrative areas are extracted by comparing data records of the candidate facilities which have been limited by the search by name with the searched area codes. Further, the candidate facilities which belong to the searched mesh areas are extracted by comparing data records of the candidate facilities which have been extracted on the basis of the area codes with the searched mesh codes. Finally, the facilities within the narrowed search range are limited by comparing position coordinates of the candidate facilities which belong to the searched mesh areas with the narrowed search range.

## Claims

1. A navigation apparatus (**1**) for displaying candidate facilities in response to a facility search, comprising:
search condition accepting means (**11**) configured to accept a search condition that limits a facility search to facilities which are located within a specific position range;
a first data table (**181**) configured to store area information on facilities;
a second datable (**182**) configured to store position information on facilities;
reference point obtaining means (**11, 16**) configured to obtain a reference point;
specific position range setting means configured to set the specific position range whose center is the obtained reference point;
extracting means configured to extract candidate facilities which are located within an area which includes the specific position range, wherein the extracting means is adapted to extract the candidate facilities using the area information of each of the candidate facilities stored in the first data table (**181**); and
range narrowing means configured to read out position information from the second data table (**182**) of each of the candidate facilities which have been extracted by the extracting means and further configured to limit the candidate facilities which have been extracted by the extracting means to candidate facilities which are located within the specific position range on the basis of the read position information;
display means configured to display the candidate facilities that have been limited by the range narrowing means,
**characterized in that**
the area information includes information of administrative areas in which facilities are located and information of mesh areas which have smaller range than the administrative areas; and
the extracting means is configured to perform extraction of the candidate facilities on the basis of the administrative area information and further configured to perform extraction from the candidate facilities, which have been extracted on the basis of the administrative area information, on the basis of the mesh area information.

2. The navigation apparatus (**1**) according to claim 1, wherein the specific position range is a predetermined distance from a specific reference point.

## Patentansprüche

1. Navigationsvorrichtung (**1**) zum Anzeigen von Kandidateneinrichtungen als Antwort auf eine Einrichtungssuche, mit:
einer Suchbedingungsannahmeeinrichtung (**11**), die eingerichtet ist, um eine Suchbedingung anzunehmen, die eine Einrichtungssuche auf Einrichtungen beschränkt, die sich innerhalb eines bestimmten Positionsbereichs befinden;
einer ersten Datenbank (**181**), die eingerichtet ist, um Gebietsinformationen über Einrichtungen zu speichern;
einer zweiten Datenbank (**182**), die eingerichtet ist, um Positionsinformationen über Einrichtungen zu speichern;
einer Referenzpunktbezugseinrichtung (**11, 16**), die eingerichtet ist, um einen Referenzpunkt zu beziehen;
einer Einstelleinrichtung eines bestimmten Positionsbereichs, die eingerichtet ist, um den bestimmten Positionsbereich einzustellen, dessen Zentrum der bezogene Referenzpunkt ist;
einer Extrahiereinrichtung, die eingerichtet ist, um Kandidateneinrichtungen zu extrahieren, die sich innerhalb eines Gebiets befinden, das den bestimmten Positionsbereich umfasst, wobei die Extrahiereinrichtung angepasst ist, um die Kandidateneinrichtungen durch Verwenden der Gebietsinformationen von jeder der in der ersten Datenbank (**181**) gespeicherten Kandidateneinrichtungen zu extrahieren; und
einer Bereichsverschmälerungseinrichtung, die eingerichtet ist, um Positionsinformationen aus der zweiten Datenbank (**182**) jeder der Kandidateneinrichtungen, die durch die Extrahiereinrichtung extrahiert wurde, auszulesen, und weiterhin eingerichtet ist, um die Kandidateneinrichtungen, die durch die Extrahiereinrichtung extrahiert wurden, auf Kandidateneinrichtungen zu begrenzen, die sich innerhalb des bestimmten Positionsbereichs befinden, auf der Basis der ausgelesenen Positionsinformationen;
einer Anzeigeeinrichtung, die eingerichtet ist, um die Kandidateneinrichtungen, die durch die Bereichsverschmälerungseinrichtung begrenzt wurden, anzuzeigen,
**dadurch gekennzeichnet, dass**
die Gebietsinformationen Informationen über administrative Gebiete, in denen sich Einrichtungen befinden, und Informationen von Rastergebieten, die einen kleineren Bereich als die administrativen Gebiete aufweisen, umfassen; und
die Extrahiereinrichtung eingerichtet ist, um ein Extrahieren der Kandidateneinrichtungen auf der Basis der Informationen über das administrative Gebiet durchzuführen, und weiterhin eingerichtet ist, um ein Extrahieren aus den Kandidateneinrichtungen, die auf der Basis der Informationen über das administrative Gebiet extrahiert wurden, auf der Basis der Rastergebietsinformationen durchzuführen.

2. Navigationsvorrichtung (**1**) gemäß Anspruch 1, wobei der bestimmte Positionsbereich eine vorbestimmte Distanz von einem bestimmten Referenzpunkt ist.

## Revendications

1. Appareil de navigation (1) destiné à afficher des installations candidates en réponse à une recherche d'installation, comportant :
des moyens d'acceptation de condition de recherche (11) configurés pour recevoir une condition de recherche qui limite une recherche d'installation à des installations qui sont situées dans une plage de position spécifique ;
une première table de données (181) configurée pour stocker de l'information de zone sur des installations ;
une deuxième table de données (182) configurée pour stocker de l'information de position sur des installations ;
des moyens d'obtention de point de référence (11, 16) configurés pour obtenir un point de référence ;
des moyens d'établissement de plage de position spécifique configurés pour établir la plage de position spécifique dont le centre est le point de référence obtenu ;
des moyens d'extraction configurés pour extraire des installations candidates qui sont situées dans une zone qui comprend la plage de position spécifique, les moyens d'extraction étant prévus pour extraire les installations candidates en utilisant l'information de zone de chacune des installations candidates stockée dans la première table de données (181) ; et
des moyens de rétrécissement de plage configurés pour lire de l'information de position dans la deuxième table de données (182) de chacune des installations candidates qui ont été extraites par les moyens d'extraction et configurés en outre pour limiter les installations candidates qui ont été extraites par les moyens d'extraction à des installations candidates qui sont situées dans la plage de position spécifique sur la base de l'information de position lue ;
des moyens d'affichage configurés pour afficher les installations candidates qui ont été limitées par les moyens de rétrécissement de plage,
**caractérisé en ce que**
l'information de zone comprend l'information de zones administratives dans lesquelles des installations sont situées et de l'information des zones de maillage qui ont une plage plus petite que les zones administratives ; et
les moyens d'extraction sont configurés pour réaliser l'extraction des installations candidates sur la base de l'information de zone administrative et configurés en outre pour réaliser l'extraction à partir des installations candidates, qui ont été extraites sur la base de l'information de zone administrative, sur la base de l'information de zone de maillage.

2. Appareil de navigation (1) selon la revendication 1, dans lequel la plage de position spécifique est une distance prédéterminée par rapport à un point de référence spécifique.
